Europäisches Patentamt

European Patent Office

Office européen des brevets

(19)

(11) Numéro de publication: **0 213 013**
**B1**

(12) **FASCICULE DE BREVET EUROPEEN**

(45) Date de publication du fascicule du brevet:
18.01.89

(51) Int. Cl.⁴: **B 65 D 51/00**

(21) Numéro de dépôt: 86401602.7

(22) Date de dépôt: 17.07.86

(54) Bouchon d'étanchéité, notamment pour couvre-culasse de véhicule automobile.

(30) Priorité: 05.08.85 FR 8511952

(43) Date de publication de la demande:
04.03.87 Bulletin 87/10

(45) Mention de la délivrance du brevet:
18.01.89 Bulletin 89/3

(84) Etats contractants désignés:
DE GB IT

(56) Documents cités:
DE-A- 3 201 022
US-A- 1 654 065
US-A- 2 077 721

(73) Titulaire: AUTOMOBILES PEUGEOT, 75, avenue de la
Grande Armée, F-75116 Paris (FR)
Titulaire: AUTOMOBILES CITROEN, 62 Boulevard
Victor-Hugo, F-92200 Neuilly-sur-Seine (FR)

(72) Inventeur: Huon, Daniel Arthur, 150, rue du Général
Leclerc Pavillon 12, F-78570 Andresy (FR)

(74) Mandataire: Moncheny, Michel et al, c/o Cabinet
Lavoix 2 Place d'Estienne d'Orves, F-75441 Paris
Cedex 09 (FR)

# Description

La présente invention concerne un bouchon d'étanchéité destiné à obturer une tubulure de remplissage munie d'une collerette interne. Elle peut s'appliquer en particulier à l'industrie automobile, pour obturer par exemple la tubulure de remplissage d'un carter d'huile ou d'un réservoir de carburant muni d'une mise à air libre annexe.

Les tubulures de remplissage de carter d'huile ont en général leur extrémité libre rabattue vers l'intérieur pour constituer une collerette interne prolongée par un rebord axial: elles sont obturées par un bouchon d'étanchéité constitué d'un couvercle muni d'un joint sur sa face interne et prolongé par un corps destiné à pénétrer dans la tubulure, le corps comportant des saillies qui coopèrent avec le rebord de la collerette pour réaliser le verrouillage du bouchon sur la tubulure: généralement ce rebord comporte une rampe hélicoïdale qui est parcourue par les saillies jusqu'à une butée correspondant à la position de verrouillage du bouchon.

Pour assurer une bonne étanchéité, le joint est appliqué contre la collerette par des moyens élastiques; ceux-ci peuvent être placés dans le couvercle et exercer un effort sur la face du joint tournée vers l'intérieur du couvercle, comme dans le brevet FR-A-2 511 345; toutefois, de tels bouchons sont constitués d'un assez grand nombre de pièces et sont donc de réalisation compliquée.

Les moyens élastiques peuvent aussi être fixés au corps du bouchon de façon à exercer un effort sur la partie inférieure du rebord de la collerette. Par exemple, le brevet EP-015 187 décrit un bouchon dans lequel les moyens élastiques sont constitués par une lame de ressort rivée sur le corps du bouchon; toutefois, le montage d'un tel bouchon, notamment du fait de l'opération de rivetage, est compliqué.

Le bouchon décrit dans le brevet EP-108 544 comporte une lame de ressort fixée au corps du bouchon par encliquetage sur un ergot muni de crans d'arrêt. Toutefois, ces moyens de fixation n'assurent pas une tenue correcte de la lame, notamment en rotation autour des axes de symétrie de celle-ci; en outre, lors du verrouillage du bouchon, les crans d'arrêt sont soumis à des efforts qui risquent de détériorer le bouchon à ce niveau et d'entraîner à la longue un défaut de tenue de la lame, voire même une perte de celle-ci.

Enfin, le document DE-A-3 201 022 décrit un bouchon correspondant au préambule de la revendication 1. L'évidement dans le corps de ce bouchon n'est constité que de deux parois de guidage verticales, ce qui n'assume qu'une faible tenue de la lame de ressort.

L'invention vise à remédier aux inconvénients précités; elle a pour but de fournir un bouchon destiné à obturer une tubulure de remplissage munie d'une collerette interne, prolongée par un rebord, notamment pour un couvre-culasse de véhicule automobile, qui, tout en assurant une très bonne tenue des moyens élastiques d'application du joint contre la collerette, soit très simple à réaliser.

Dans ce but un bouchon comprenant un couvercle portant un joint d'étanchéité adapté pour coopérer avec la collerette, et un corps adapté pour pénétrer dans la tubulure, ce corps portant un organe élastique adapté pour coopérer avec le rebord pour verrouiller le bouchon et appliquer le joint contre la collerette, dans lequel le couvercle et le corps font partie d'une pièce monobloc en matière plastique, le corps comportant un évidement qui s'étend suivant un diamètre, parallèlement au couvercle, et débouche à ses deux extrémités, l'organe élastique étant une lame de ressort maintenue dans cet évidement, est caractérisé en ce que ledit évidement est délimité par des parois latérales, supérieures et inférieures, qui coopèrent avec des parties adjacentes de la lame de ressort; l'évidement comporte à chacune des ses extrémités un dégagement autorisant et limitant un débattement en flexion de l'extrémité adjacente de la lame de ressort; la lame de ressort et une paroi de l'évidement comportent dans leurs parties médianes des moyens complémentaires à enclenchement élastique, assurant le maintien de la lame dans le corps; et une rainure est ménagée dans la paroi supérieure de l'évidement pour permettre l'engagement de la lame.

L'invention va être décrite ci-après de façon plus précise en référence à un mode de réalisation préféré donné uniquement à titre d'exemple et représenté sur les dessins annexés, sur lesquels:

— la fig. 1 est une vue en partie en élévation et en partie en coupe longitudinale d'un bouchon selon l'invention, la partie en coupe représentant le bouchon en place sur une tubulure;

— la fig. 2 est une vue de côté du bouchon de la fig. 1 avec coupe longitudinale partielle, la lame de ressort n'ayant pas été représentée, pour plus de clarté;

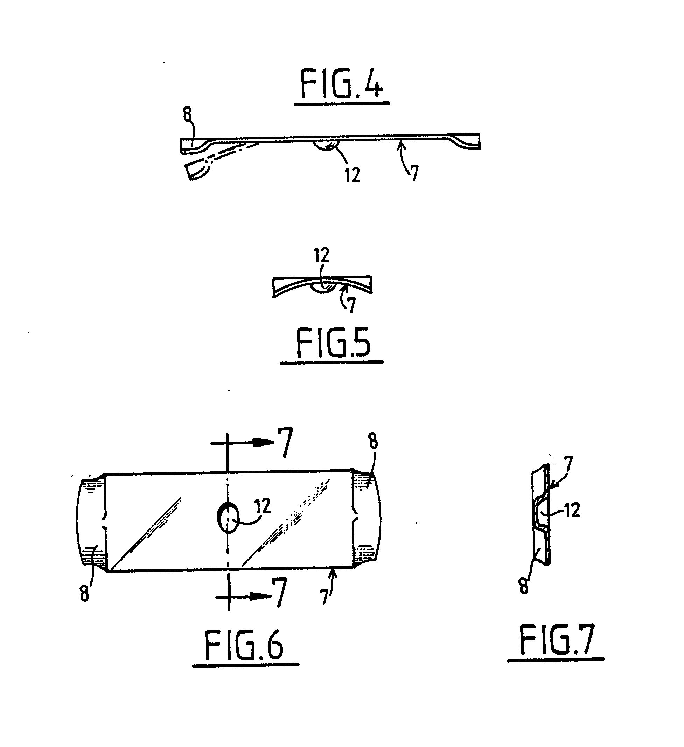

— la fig. 3 est une vue en coupe suivant la ligne 3-3 de la fig. 1, la lame de ressort n'ayant pas été représentée;

— la fig. 4 est une vue en élévation d'une lame de ressort faisant partie du bouchon de la fig. 1;

— la fig. 5 est une vue de côté de la lame de la fig. 4, en position non fléchée;

— la fig. 6 est une vue de dessus de la lame;

— la fig. 7 est une vue en coupe suivant la ligne 7-7 de la fig. 6.

Le bouchon représenté sur les figures comprend une pièce en matière plastique monobloc comportant un couvercle 1 muni d'une barrette de manoeuvre 1a et un corps 2 cylindrique ou légèrement conique.

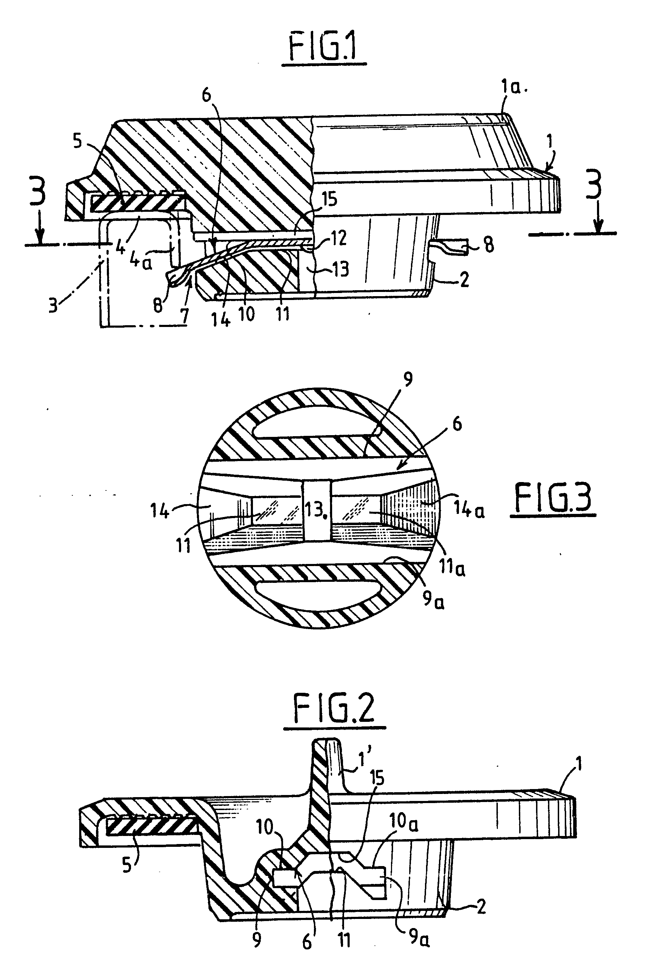

Le corps 2 est destiné à pénétrer dans une tubulure de remplissage 3 muni d'une collerette interne 4 prolongée par un rebord axial 4a constituant une rampe hélicoïdale. Cette tubulure est représentée en trait mixte sur la partie coupée de la fig. 1.

Le couvercle 1 est munie sur sa face interne d'un joint d'étanchéité 5 qui s'applique contre la collerette 4 lors du verrouillage du bouchon.

Le corps 2 comporte un évidement 6 réalisé suivant l'une de ses diamètres, parallèlement au couvercle et débouchant à ses deux extrémités.

Une lame de ressort 7 à peu près plane est logée dans l'évidement 6. A chacune de ses extrémités, la lame 7 délimite une oreille 8 de forme incurvée qui coopère avec la rampe hélicoïdale 4a pour verrouiller le bouchon et appliquer le joint 5 contre la collerette 4.

La lame 7 est bloquée en rotation dans l'évidement 6 par des faces d'appui latérales 9, 9a, supérieures 10, 10a et inférieures 11, 11a de l'évidement. Elle est bloquée en translation au moyen d'une saillie 12 coopérant avec un dégagement 13 de l'évidement 6 pour assurer la fixation de la lame dans l'évidement par encliquetage.

L'évidement comporte en outre à ses extrémités, deux dégagements 14 et 14a constitués par des pans inclinés prévus dans sa paroi inférieure, pour permettre la flexion de la lame 7 lors du verrouillage du bouchon (Fig. 1), ainsi qu'une rainure 15 ménagée dans sa face supérieure et qui permet l'engagement de la lame 7.

La réalisation du bouchon que l'on vient de décrire est très simple: ce bouchon comprend une pièce principale en matière plastique, la lame 7 emboutie se monte dans l'évidement 6 réalisé dans ladite pièce, par simple poussée latérale et encliquetage dans le dégagement 13. Les faces d'appui de l'évidement 6 assurent une très bonne tenue de la lame une fois montée. En outre, comme la lame ne fléchit qu'au niveau des dégagements 14 et 14a, on ne risque pas de détérioration au niveau du point de fixation central de la lame.

## Revendications

1. Bouchon destiné à obturer l'extrémité d'une tubulure (3) repliée pour former une collerette interne (4) prolongée par un rebord axial (4a) formant rampe, ce bouchon comprenant un couvercle (1) portant un joint d'étanchéité (5) adapté pour coopérer avec la collerette (4), et un corps (2) adapté pour pénétrer dans la tubulure (3), ce corps (2) portant un organe élastique adapté pour coopérer avec le rebord (4a) pour verrouiller le bouchon et appliquer le joint (5) contre la collerette (4), dans lequel le couvercle (1) et le corps (2) font partie d'une pièce monobloc en matière plastique, le corps (2) comportant un évidement (6) qui s'étend suivant un diamètre, parallèlement au couvercle (1), et débouche à ses deux extrémités, l'organe élastique étant une lame de ressorr (7) maintenue dans cet évidement (6), caractérisé en ce que ledit évidement (6) est délimité par des parois latérales (9, 9a), supérieures (10, 10a) et inférieures (11, 11a), qui coopèrent avec des parties adjacentes de la lame de ressort (7); l'évidement (6) comporte à chacune de ses extrémités un dégagement (14, 14a) autorisant et limitant un débattement en flexion de l'extrémité adjacente de la lame de ressort (7); la lame de ressort (7) et une partie de l'évidement (6) comportent dans leurs parties médianes des moyens complémentaires (12, 13) à enclenchement élastique, assurant le maintien de la lame (7) dans le corps (2); et une rainure (15) est ménagée dans la paroi supérieure de l'évidement (6) pour permettre l'engagement de la lame (7).

2. Bouchon suivant la revendication 1, caractérisé en ce que les dégagements (14, 14a) sont délimités par des pans inclinés prévus dans la paroi inférieure (11, 11a) de l'évidement (6).

3. Bouchon suivant la revendication 1, caractérisé en ce que la lame de ressort (7) est à peu près plane et comporte à chaque extrémité une oreille incurvée (8) coopérant avec le rebord (4a) de la collerette (4), et dans sa partie médiane, une saillie (12) coopérant avec un orifice (13) prévu dans la paroi adjacente (11, 11a) de l'évidement (6), cette saillie et cet orifice formant lesdits moyens complémentaires à enclenchement élastique.

## Patentansprüche

1. Verschluss zum Verschliessen des Endes eines Rohrstutzens (3), das zur Bildung eines Innenrings (4) mit einer axialen Bördelung (4a) mit ansteigender Kante abgekantet ist, mit einem Deckel (1), der einen mit dem Innenring (4) zusammenwirkenden Dichtring (5) trägt, und einem in den Rohrstutzen (3) einführbaren Körper (2), der ein elastisches Organ trägt, das mit der Bördelung (4a) zur Verriegelung des Verschlusses und zum Andrücken des Dichtrings (5) an den Innenring (4) zusammenwirken kann, wobei der Deckel (1) und der Körper (2) einstückig aus Kunststoff gebildet sind, der Körper (2) eine Aussparung (6) aufweist, die sich auf einem Durchmesser parallel zum Deckel (1) erstreckt und an ihren beiden Enden ausmündet, und das elastische Organ aus einer in der Aussparung (6) gehaltenen Blattfeder besteht, dadurch gekennzeichnet, dass die Aussparung (6) durch Seitenwände (9, 9a) obere Wände (10, 10a) und untere Wände (11, 11a) abgegrenzt ist, die mit angrenzenden Teilen der Blattfeder (7) zusammenwirken, und an jedem ihrer Enden eine Ausweitung (14, 14a) aufweist, die einen Biegungsausschlag des entsprechenden Endes der Blattfeder (7) zulässt und begrenzt, dass die Blattfeder (7) und ein Teil der Aussparung (6) in ihren Mittelbereichen einander ergänzende, ineinander einrastbare Einrichtungen (12, 13) aufweisen, die den Halt der Blattfeder (7) in dem Körper (2) gewährleisten, und dass in der oberen Wand der Aussparung (6) eine Nut (15) zur Einführung der Blattfeder (7) vorgesehen ist.

2. Verschluss nach Anspruch 1, dadurch gekennzeichnet, dass die Ausweitungen (14, 14a) durch Schrägflächen abgegrenzt sind, die in der unteren Wand (11, 11a) der Aussparung (6) vorgesehen sind.

3. Verschluss nach Anspruch 1, dadurch gekennzeichnet, das die Blattfeder (7) im wesentlichen eben ist und an jedem Ende einen gekrümmten Lappen (8), der mit der Bördelung (4a) des Innenrings (4) zusammenwirkt, und in ihrem Mittelteil einen Vorsprung (12) aufweist, der mit einer in der benachbarten Wand (11, 11a) der Aussparung (6) vorgesehenen Öffnung (13) zusammenwirkt, wobei der Vorsprung und die Öffnung die einander ergänzenden, ineinander elastisch einrastbaren Einrichtungen bilden.

## Claims

1. A plug adapted to close the end of a tube (3) folded to form an internal collar (4) continued by an axial rim (4a) forming a ramp, the plug comprising:

a cover (1) bearing a sealing joint (5) adapted to cooperate with the collar (4) and a body (2) adapted to enter the tube (3), the body (2) bearing a resilient member adapted to cooperate with the rim (4a) to lock the plug and apply the joint (5) against the collar (4), the cover (1) and the body (2) forming part of a one-piece plastics member, the body (2) comprising a recess (6) extending along a diameter parallel with the cover (1) and open at both ends, the resilient member being a spring leaf (7) retained in the recess (6), characterized in that the recess (6) is bounded by side walls (9, 9a), upper walls (10, 10a) and lower walls (11, 11a) which cooperate with adjacent portions of the spring leaf (7); the recess (6) has at each of its ends a clearance (14, 14a) allowing and limiting a flexural movement of the adjacent end of the spring leaf (7); the spring leaf (7) and a portion of the recess (6) comprise in their central portions complementary resiliently engaging means (12, 13) for retaining the leaf (7) in the body (2); and the lower wall of the recess (6) is formed with a groove (15) to allow the engagement of the leaf (7).

2. A plug according to claim 1, characterized in that the clearances (14, 14a) are bounded by inclined stretches of the lower wall (11, 11a) of the recess (6).

3. A plug according to claim 1, characterized in that the spring leaf (7) is substantially flat and has at each end an inwardly curved lug (8) cooperating with the rim (4a) of the collar (4) and in its central portion a projection (12) cooperating with an opening (13) in the adjacent wall (11, 11a) of the recess (6), the projection and the opening forming the said resiliently engaging complementary means.

## FIG.1

## FIG.3

## FIG.2

FIG.4

FIG.5

FIG.6

FIG.7